# EUROPÄISCHE PATENTSCHRIFT

(11) **EP 2 300 292 B1**
(45) Veröffentlichungstag und Bekanntmachung des Hinweises auf die Patenterteilung: **17.12.2014**
(21) Anmeldenummer: 09780471.0
(22) Anmeldetag: 10.07.2009
(51) Int. Cl.: B60T 17/04, B60T 7/20, B60T 13/26, B62D 53/12

(54) **EINBREMSAUTOMATIK**
AUTOMATIC BRAKE
SYSTÈME AUTOMATIQUE DE FREINAGE

(30) Priorität: 10.07.2008 DE 102008040337
(43) Veröffentlichungstag der Anmeldung: 30.03.2011
(73) Patentinhaber: Jost-Werke GmbH, 63263 Neu-Isenburg (DE)
(72) Erfinder: ALGÜERA GALLEGO, José Manuel, 63739 Aschaffenburg (DE); EIERMANN, Michael, 64319 Pfungstadt (DE)
(74) Vertreter: Mehler Achler
(86) Internationale Anmeldenummer: PCT/EP2009/058872
(87) Internationale Veröffentlichungsnummer: WO 2010/004048

(56) Entgegenhaltungen:
- WO-A-01/44030
- GB-A- 2 417 764
- US-B1- 6 450 587

## Beschreibung

Die Erfindung betrifft ein System zum Einbremsen eines an ein Zugfahrzeug gekuppelten Anhängers gemäß der im Oberbegriff des Anspruchs 1 stehenden Merkmale.

Ein derartiges System ist beispielsweise aus der DE 10 2004 047 492 A1 beschrieben. Die bekannte Druckschrift offenbart außerdem zur Arbeitserleichterung des Fahrers anstelle der üblichen von Hand zu steckender Steckkupplungen ein automatisiertes Steckkupplungssystem im Bereich einer Sattelkupplung.

Die DE 101 59 503 A1 beschreibt eine Überwachungs- und Steuereinrichtung für Sattelzüge mit einem Zugfahrzeug mit einer fernbedienbaren Sattelkupplung und einem Auflieger mit mindestens einer elektrisch betriebenen Einrichtung, wie Stützwinden. An dem Zugfahrzeug ist ein elektrisch mit der Sattelkupplung verbundenes Steuergerät und an dem Auflieger ein damit drahtlos in Verbindung stehendes Kommunikationsgerät vorgesehen

Der wesentliche Nachteil der bekannten Systeme liegt darin, dass ein Einbremsen des Aufliegers erst mit einem zeitlichen Versatz nach dem Trennen der Versorgungsleitungen erfolgt. Unter dem Einbremsen versteht der Fachmann ein Betätigen der üblicherweise als Federspeicherbremse ausgebildeten Feststellbremse des Anhängers unmittelbar vor dem Abkuppeln. Hierfür öffnet der Fahrer ein im Bremskreis des Anhängers befindliches Entlüftungsventil von Hand, so dass sich der Eremskreislauf in einem drucklosen Zustand befindet und in den Federspeicherbremsen angeordnete Federpakete die Bremse schließen. Bei automatischen Steckkupplungssystemen werden die Steckerhälften des zugfahrzeugseitigen Versorgungskreises und aufliegerseitigen Bremskreises beim Entkuppeln der Fahrzeuge automatisch getrennt und dadurch der Bremskreis zwangsweise entlüftet. Dennoch kann es hierbei auch zu einem zeitlichen Versatz zwischen dem Trennvorgang der Steckerhälften und dem Wirken der Feststellbremse kommen. Dieses wiederum birgt die Gefahr einer Relativbewegung des Anhängers oder unter Umständen eines Zurückrollens beider Fahrzeuge.

Die WO 01/44030 A2 offenbart ein Anti-Diebstahlsystem für Auflieger, das mit dem pneumatischen Bremssystem des Aufliegers zusammenwirkt. Ein bei betätigter Feststellbremse geschlossenes Magnetventil ist in die Druckluftversorgungsleitung zum Öffnen der Bremse zwischengeschaltet. In der geschlossenen Stellung des Magnetventils besteht eine Verbindung zur atmosphärischen Umgebung, so dass ein noch bestehender Restdruck in dem Leitungszweig zwischen Magnetventil und Feststellbremse ausströmen kann und die Feststellbremse drucklos geschaltet ist.

Demzufolge lag der Erfindung die Aufgabe zugrunde, ein System zum Einbremsen eines Anhängers bereitzustellen, bei dem das Risiko einer unkontrollierten Fahrzeugbewegung zumindest des Anhängerfahrzeugs sowie eine Fehlbetätigung von Kupplungsvorrichtung und Stützwinde vermindert ist.

Die Aufgabe wird erfindungsgemäß mit einem System gemäß der im kennzeichnenden Teil des Anspruchs 1 stehenden Merkmale gelöst. Bei Erreichen der vorgesehenen Parkposition des Anhängers kann der Fahrer das Einbremsen des Anhängers bereits vor dem Öffnen der Kupplungsvorrichtung oder dem Ausfahren der Stützwinden vornehmen, ohne das Fahrzeug verlassen und ein entsprechendes Ventil am Auflieger von Hand bedienen zu müssen.

Vorteilhafterweise ist das Entlüftungsventil drahtlos angesteuert. Es ist jedoch auch möglich, eine Steuerleitung über von Hand zu kuppelnde Versorgungsleitungen des Versorgungskreises vorzusehen oder die Steuerleitung in ein automatisiertes Steckkupplungssystem zu integrieren, da ein mechanisches Trennen des Anhängers von dem Zugfahrzeug und ein damit verbundenes Abkuppein des anhängerseitigen Bremskreises von dem Versorgungskreis des Zugfahrzeugs grundsätzlich erst nach dem Einbremsen erfolgen soll. Beim Aufnehmen des Anhänger dagegen wird zuerst eine mechanische Verbindung des Anhängers mit dem Zugfahrzeug hergestellt, der Bremskreis an den Versorgungskreis angeschlossen und anschließen die Feststellbremse des Anhängers gelöst. Das Lösen der Feststellbremse eines bereits angekuppelten Anhängers erfolgt aus dem Fahrerhaus des Zugfahrzeugs durch ein Schließen des Entlüftungsventils im Bremskreis des Anhängers. Daraufhin erfolgt der Druckaufbau in der Bremsanlage des Aufliegers.

Prinzipiell ist es auch möglich, zumindest die anhängerseitige Bremsanlage mit einem anderen Medium anstelle der üblicherweise verwendeten Druckluft zu betreiben. Die Energie zum Überwinden der Federkräfte in der Federspeicherbremse könnte beispielsweise auch aus Batterien oder Akkumulatoren stammen. In diesem Fall wäre das Entlüftungsventil ein Bauelement, welches geeignet ist, den Bremskreis des Anhängers energielos zu schalten.

Es hat sich auch als besonders günstig herausgestellt, wenn das Entlüftungsventil mittels eines Bedienschalters aus dem Fahrerhaus des Zugfahrzeugs gesteuert ist. In dieser ersten Ausführungsform ist der Bedienschalter von dem Anhänger auf das Zugfahrzeug vertegt.

Vorzugsweise ist der Verschlusszustand des Entlüftungsventils von dem Zugfahrzeug aus abfragbar. Hierdurch werden fehlbedienungen durch den Fahrer weiter vermindert, da dieser stets über die Öffnungsbeziehungsweise Verschlussstellung des Entlüftungsventils informiert ist. Besonders vorteilhaft ist eine Ausführungsform, bei der das Entlüftungsventil ein Signal aussendet.

Grundsätzlich ist der Bedienschalter des Entlüftungsventils derart mit am Anhänger angeordneten Stützwinden gekoppelt, dass diese nur bei geöffnetem Entlüftungsventil ausgefahren werden können. Ebenso wird eine an dem Zugfahrzeug angeordnete Verriegelungsmechanik der Kupplungsvorrichtung nur bei einem geöffneten Entlüftungsventil aus einer Verriegelungsstellung in eine Öffnungsstellung gebracht.

Zweckmäßigerweise umfasst das erfindungsgemäße System ein automatisiertes Steckkupplungssystem zum Verbinden und Trennen des Versorgungs- und Bremskreises. Dabei kann das Zugfahrzeug ein Steuergerät aufweisen, welches eine Plausibilitätsprüfung der Eingabe des Fahrers durchführt und das Entlüftungsventil ansteuert. Mit dieser Ausführungsform wird die der Erfindung zugrunde liegende Aufgabe besonders vorteilhaft gelöst und eine Fehlbedienung durch den Fahrer nahezu ausgeschlossen.

Gemäß einer besonders bevorzugten Ausführungsform erhält das Steuergerät ein Signal von der Feststellbremse des Zugfahrzeuges. Alternativ oder zusätzlich kann das Steuergerät ein Signal von der Zündung des Zugfahrzeugs oder dem Fahrzeugsteuergerät erhalten.

Günstigerweise ist die Verschlussmechanik der Kupplungsvorrichtung an das Steuergerät angeschlossen und von dem Zugfahrzeug aus fernbedienbar. Hieraus resultiert eine äußerst komfortables An- und Abkuppeln des Anhängers, da der Fahrer auch die Funktionen zum Öffnen und Schließen der Kupplungsvorrichtung aus dem Fahrerhaus vornehmen kann. Durch die Anbindung der fernbedienbaren Verschlussmechanik an das Steuergerät wird systemimmanent ein Öffnen der Verschlussmechanik bei ungeöffnetem Entlüftungsventil des Anhänger-Bremskreises vermieden. Andernfalls könnte es passieren, dass ein Sattelauflieger noch auf der Sattelkupplung aufliegt und die Reibung zwischen der Sattelkupplung und der Auftiegerplatte größer als der Rollwiderstand des Aufliegers ist. In diesem Fall würde der Auflieger über eine gewisse Wegstrecke mitgeschleppt werden, ohne mit dem Zugfahrzeug sicher verbunden zu sein. Das Steuergerät sorgt jedoch für ein Öffnen des Entlüftungsventils vordem Öffnen der Verschlussmechanik, so dass stets die Feststellbremse des Anhängers wirksam greift und den Anhänger in einer ortsfesten Position hält.

Das Steuergerät kann ein Signal von dem Entlüftungsventil erhalten und auf die Feststellbremse des Zugfahrzeugs einwirken. Hierdurch erfolgt eine weitere Absicherung, da es nur möglich ist, das Zugfahrzeug von einem zum Abkuppeln bereiten Anhänger zu trennen, wenn seitens des Anhängers die Feststellbremse wirksam ist.

Ebenso kann es vorgesehen sein, dass das Steuergerät ein Signal von dem Entlüftungsventil erhält und die Verschlussmechanik der Kupplungsvorrichtung blockiert oder freigibt.

Zum besseren Verständnis wird die Erfindung nachfolgend anhand von zwei Figuren näher erläutert. Es zeigen die
- **Figur 1:**: eine schematische Seitenansicht auf das erfindungsgemäße System an einem Zugfahrzeug mit Anhänger und von Hand zu steckenden Versorgungsleitungen sowie
- **Figur 2:**: eine Ansicht gemäß Figur 1 mit einem automatisierten Steckkupplungssystem zum Verbinden von Versorgungs- und Bremskreis.

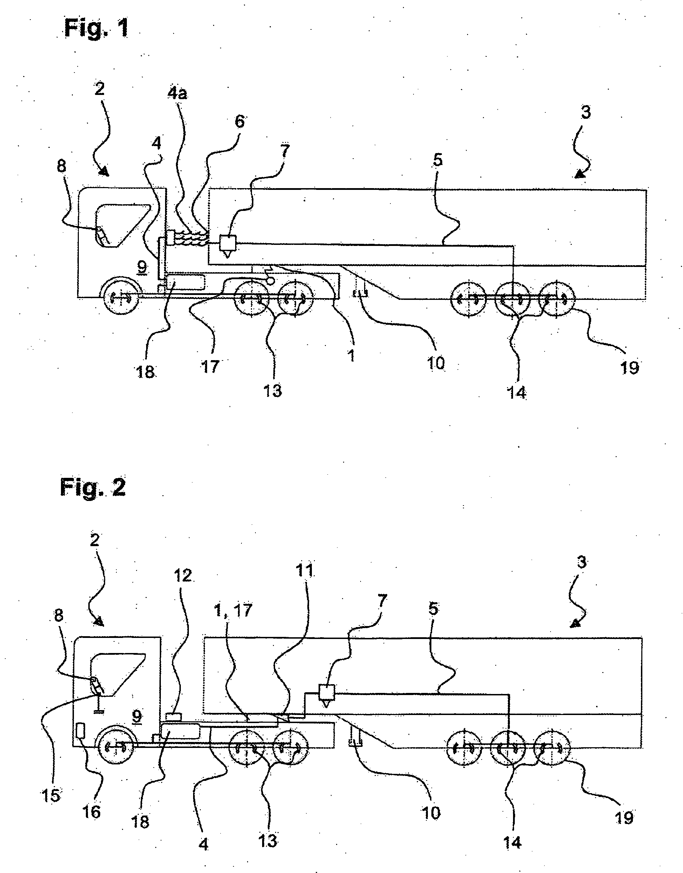

Die Figur 1 zeigt das erfindungsgemäße System an einem Zugfahrzeug 2 mit daran angekuppeltem Anhänger 3, welche zusammen einen Sattelzug bilden. Der Anhänger 3 ist über eine als Sattelkupplung ausgebildete Kupplungsvorrichtung 1 lösbar mit dem Zugfahrzeug 2 verbunden.

Das Zugfahrzeug 1 weist einen Versorgungskreis 4 auf, der auch der Versorgung des Anhängers 3 mit Energie in Form von elektrizität und Druckluft dient. Im Heckbereich des Anhängers 3 sind Räder 19 angeordnet, auf welche eine Feststellbremse 14 wirkt. Die Feststellbremse 14 umfasst im Wesentlichen eine Federspeicherbremse, die ohne das Vorhandensein eines Zugfahrzeugs 2 aufgrund darin befindlicher Federpakete eine Bremswirkung hervorruft. Zum Bewegen des Anhängers wird der an die Feststellbremse 14 angeschlossene Bremskreis 5 des Anhängers mit Druckluft beaufschlagt, dadurch die Federpakete gegen Ihre Federkraft aus Ihrer geschlossenen Stellung herausgedrückt und die Räder 19 freigegeben.

Das Beaufschlagen des anhängerseitigen Bremskreises 5 erfolgt über den Versorgungskreis 4 des Zugfahrzeugs 2. Dieser umfasst einen Druckluftspeicher 18, welcher über einen nicht gezeigten Kompressor auf einem vorgegebenen Druckniveau gehalten wird. Aus dem Druckluftspeicher 18 werden außerdem die Feststellbremsen 13 des Zugfahrzeugs 2 gespeist.

Gemäß der in Figur 1 dargestellten ersten Ausführungsform sind auf der Rückseite des Fahrerhauses 9 an den Versorgungskreis 4 flexible Versorgungsleitungen 4a angeschlossen. Nach dem mechanischen Verbinden von Zugfahrzeug 2 und Anhänger 3 werden die Versorgungsleitungen 4a von Hand mittels Steckkupplungen 6 an der Vorderseite des Anhängers 3 angebracht und dadurch eine Versorgung unter anderem des Bremskreises 5 mit Druckluft hergestellt.

Um den Bremskreis 5 des Anhängers 3 nach Erreichen seiner Parkposition drucklos zu schalten und dadurch eine Rollbewegung der Räder 19 auszuschließeh, ist in dem Bremskreis 5 zwischen der Steckkupplung 6 und der Feststellbremse 14 ein Entlüftungsventil 7 angeordnet. Das Entlüftungsventil 7 des Bremskreises 5 ist von einem Bedienschalter 8 im Fahrerhaus 9 des Zugfahrzeugs 2 fernbedienbar. Nach dem Öffnen des Entlüftungsventils 7 wirken die Feststellbremsen 14 des Anhängers 3 und der Fahrer kann im vorderen Bereich des Anhängers 3 angeordnete Stützwinden 10 ausfahren sowie die Verschlussmechanik 17 der Kupplungsvorrichtung 1 Öffnen.

Einen zusätzlichen Komfort- und Sicherheitsgewinn lässt sich mit der vorteilhaften Anordnung der Erfindung gemäß Figur 2 erreichen. Der Bremskreis 5 des Anhängers 3 ist dabei mittels eines Steckkupplungssystems 11 mit dem Versorgungskreis 4 des Zugfahrzeugs 2 verbunden. Das Steckkupplungssystem 11 umfasst eine anhängerseitigen Steckerhälfte, die während oder nach dem Ankuppeln des Anhängers 3 im Bereich der Kupplungsvorrichtung 1 mit einer komptementären Steckerhälfte des Zugfahrzeugs 2 in Wirkeingriff gelangt.

Der Einsatz von Steckkupplungssystemen 11 macht ein Aufsteigen des Fahrers in den beengten Bauraum zwischen dem Fahrerhaus des Zugfahrzeugs 2 und dem Anhänger 3 überflüssig. Die in Figur 1 erkennbaren Versorgungsleitungen 4a entfallen bei Verwendung eines Steckkupplungssystems 11 vollständig.

Bei dieser Ausführungsform ist auf dem Zugfahrzeug 2 ein Steuergerät 12 angeordnet, welches drahtlos Signale mit dem Entlüftungsventil 7 austauscht. Darüber hinaus dient das Steuergerät 12 der Ansteuerung des Steckkupplungssystems 11 und der motorisch verfahrbaren Stutzwinden 10.

Nach dem Erreichen der vorgesehenen Parkposition des Anhängers 3 betätigt der Fahrer den Bedienschalter 8, welcher ein Signal zunächst an das Steuergerät 12 ausgibt. Das Steuergerät 12 fragt vorzugsweise das Fahrzeugsteuergerät 16 und gegebenenfalls zusätzlich den Zustand der Zündung 15 und/oder der Feststellbremse 13 des Zugfahrzeugs 2 ab. Vor dem Lösen der fernbedienbaren Verschlussmechanik 17 (siehe Figur 1) ist ein Stillstand des Zugfahrzeugs 2 mit betätigter Feststellbremse 13 unabdingbare Voraussetzung. Anschließend löst das Steuergerät 12 ein Öffnen des Entlüftungsventils 7 aus, so dass auch die Feststellbremse 14 des Anhängers 14 wirkt. Erfindungsgemäß bewirkt die Betätigung des Entlüftungsventils 7 einen Stillstand des Anhängers.

In weiteren Schritten wird von dem Steuergerät 12 das automatische Ausfahren der Stützwinden 10 und ein anschließendes Öffnen der Verschlussmechanik 17 bewirkt.

Durch die Anbindung des Steuergerätes 12 an das Fahrzeugsteuergerät 16 kann bei einem nicht geöffneten Entlüftungsventil 7 beispielsweise das Anfahren des Zugfahrzeugs 2 verhindert werden.

### Bezugszeichenliste

- 1: Kupplungsvorrichtung
- 2: Zugfahrzeug
- 3: Anhänger
- 4: Versorgungskreis
- 4a: Versorgungsleitungen
- 5: Bremskreis
- 6: Steckkupplung
- 7: Entlüftungsventil
- 8: Bedienschalter
- 9: Fahrerhaus
- 10: Stützwinden
- 11: Steckkupplungssystem
- 12: Steuergerät
- 13: Feststellbremse Zugfahrzeug
- 14: Feststellbremse Anhänger
- 15: Zündung Zugfahrzeug
- 16: Fahrzeugsteuergerät
- 17: Verschlussmechanik
- 18: Druckluftspeicher Zugfahrzeug
- 19: Räder Anhänger

## Patentansprüche

1. System zum Einbremsen eines mit einer Kupplungsvorrichtung (1) an ein Zugfahrzeug (2) gekuppelten Anhängers (3), umfassend einen zugfahrzeugseitigen Versorgungskreis (4) und einen anhängerseitigen Bremskreis (5), wobei der Bremskreis (5) mittels mindestens einer Steckkupplung (6) lösbar an den Versorgungskreis (4) angeschlossen ist und innerhalb des Bremskreises (5) ein von dem Zugfahrzeug (2) aus fernbedienbares Entlüftungsventil (7) angeordnet ist,
**dadurch gekennzeichnet,**
**dass** an dem Anhänger (3) angeordnete Stützwinden (10) und/oder eine Verriegelungsmechanik der Kupplungsvorrichtung (1) nur bei geöffnetem Entlüftungsventil (7) ausfahrbar sind und/oder zu öffnen ist.

2. System nach Anspruch 1, **dadurch gekennzeichnet, dass** das Entlüftungsventil (7) drahtlos angesteuert ist.

3. System nach Anspruch 1 oder 2, **dadurch gekennzeichnet, dass** das Entlüftungsventil (7) mittels eines Bedienschalters (8) aus dem Fahrerhaus (9) des Zugfahrzeugs (2) gesteuert ist.

4. System nach einem der Ansprüche 1 bis 3, **dadurch gekennzeichnet, dass** der Verschlusszustand des Entlüftungsventils (7) von dem Zugfahrzeug (2) aus abfragbar ist.

5. System nach Anspruch 1, umfassend ein automatisiertes Steckkupplungssystem (11) zum automatisierten Verbinden und Trennen des Versorgungs- und Bremskreises (4, 5), **dadurch gekennzeichnet, dass** das Zugfahrzeug (2) ein Steuergerät (12) aufweist, welches eine Plausibilitätsprüfung der Eingabe des Fahrers durchführt und das Entlüftungsventil (7) ansteuert.

6. System nach Anspruch 5, **dadurch gekennzeichnet, dass** das Steuergerät (12) ein Signal von der Feststellbremse (13) des Zugfahrzeuges (2) erhält.

7. System nach Anspruch 5 oder 6, **dadurch gekennzeichnet, dass** das Steuergerät (12) ein Signal von der Zündung (15) des Zugfahrzeugs (2) erhält.

8. System nach einem der Ansprüche 5 bis 7, **dadurch gekennzeichnet, dass** das Steuergerät (12) ein Signal des Fahrzeugsteuergerätes (16) erhält.

9. System nach einem der Ansprüche 5 bis 8, **dadurch gekennzeichnet, dass** die Verschlussmechanik (17) der Kupplungsvorrichtung (1) an das Steuergerät (12) angeschlossen und von dem Zugfahrzeug (2) aus fernbedienbar ist.

10. System nach einem der Ansprüche 5 bis 9, **dadurch gekennzeichnet, dass** das Steuergerät (12) ein Signal von dem Entlüftungsventil (7) erhält und auf die Feststellbremse (13) des Zugfahrzeugs (2) einwirkt.

11. System nach einem der Ansprüche 5 bis 10, **dadurch gekennzeichnet, dass** das Steuergerät (12) ein Signal von dem Entlüftungsventil (7) erhält und die Verschlussmechanik (17) der Kupplungsvorrichtung (1) blockiert oder freigibt.

## Claims

1. System for braking a trailer (3) which is coupled to a towing vehicle (2) by means of a coupling device (1), comprising a supply circuit (4) on the towing vehicle side and a brake circuit (5) on the trailer side, wherein the brake circuit (5) is releasably connected to the supply circuit (4) by means of at least one plug-in coupling (6) and there is arranged in the brake circuit (5) an air outlet valve (7) which is remotely controllable from the towing vehicle (2),
**characterised in that**
support jacks (10) arranged on the trailer (3) and/or a locking mechanism of the coupling device (1) can be extended and/or is to be opened only when the air outlet valve (7) is open.

2. System according to claim 1, **characterised in that** the air outlet valve (7) is controlled wirelessly.

3. System according to claim 1 or 2, **characterised in that** the air outlet valve (7) is controlled from the cab (9) of the towing vehicle (2) by means of an operating switch (8).

4. System according to any one of claims 1 to 3, **characterised in that** the closure status of the air outlet valve (7) is queryable from the towing vehicle (2).

5. System according to claim 1, comprising an automated plug-in coupling system (11) for automatically connecting and disconnecting the supply and brake circuit (4, 5), **characterised in that** the towing vehicle (2) has a control device (12) which performs a plausibility check of the input of the driver and controls the air outlet valve (7).

6. System according to claim 5, **characterised in that** the control device (12) receives a signal from the parking brake (13) of the towing vehicle (2).

7. System according to claim 5 or 6, **characterised in that** the control device (12) receives a signal from the ignition (15) of the towing vehicle (2).

8. System according to any one of claims 5 to 7, **characterised in that** the control device (12) receives a signal of the vehicle control device (16).

9. System according to any one of claims 5 to 8, **characterised in that** the closure mechanism (17) of the coupling device (1) is connected to the control device (12) and is remotely controllable from the towing vehicle (2).

10. System according to any one of claims 5 to 9, **characterised in that** the control device (12) receives a signal from the air outlet valve (7) and acts upon the parking brake (13) of the towing vehicle (2).

11. System according to any one of claims 5 to 10, **characterised in that** the control device (12) receives a signal from the air outlet valve (7) and blocks or releases the closure mechanism (17) of the coupling device (1).

## Revendications

1. Système de freinage d'une remorque (3) attelée à un véhicule tracteur (2) au moyen d'un dispositif d'accouplement (1), comprenant un circuit d'alimentation (4) côté véhicule tracteur et un circuit de freinage (5) côté remorque, le circuit de freinage (5) étant raccordé au circuit d'alimentation (4) de manière détachable au moyen d'au moins un accouplement enfichable (6) et une soupape de purge (7) pouvant être commandée à distance depuis le véhicule tracteur (2) étant disposée à l'intérieur du circuit de freinage (5),
**caractérisé en ce**
**que** des béquilles (10) disposées sur la remorque (3) et/ou un mécanisme de verrouillage du dispositif d'accouplement (1) ne peuvent être sorties et/ou ne peut être ouvert que si la soupape de purge (7) est ouverte.

2. Système selon la revendication 1, **caractérisé en ce que** la soupape de purge (7) est commandée sans fil.

3. Système selon la revendication 1 ou 2, **caractérisé en ce que** la soupape de purge (7) est commandée au moyen d'un bouton de commande (8) depuis la cabine de conduite (9) du véhicule tracteur (2).

4. Système selon l'une des revendications 1 à 3, **caractérisé en ce que** l'état de fermeture de la soupape de purge (7) peut être interrogé depuis le véhicule tracteur (2).

5. Système selon la revendication 1, comprenant un système d'accouplement enfichable automatisé (11) pour connecter et déconnecter de manière automatisée les circuits d'alimentation et de freinage (4, 5), **caractérisé en ce que** le véhicule tracteur (2) comporte un boîtier de commande (12) qui effectue un contrôle de plausibilité de l'entrée du conducteur et commande la soupape de purge (7).

6. Système selon la revendication 5, **caractérisé en ce que** le boîtier de commande (12) reçoit un signal du frein de stationnement (13) du véhicule tracteur (2).

7. Système selon la revendication 5 ou 6, **caractérisé en ce que** le boîtier de commande (12) reçoit un signal de l'allumage (15) du véhicule tracteur (2).

8. Système selon l'une des revendications 5 à 7, **caractérisé en ce que** le boîtier de commande (12) reçoit un signal du boîtier de commande du véhicule (16).

9. Système selon l'une des revendications 5 à 8, **caractérisé en ce que** le mécanisme de verrouillage (17) du dispositif d'accouplement (1) est raccordé au boîtier de commande (12) et peut être commandé à distance depuis le véhicule tracteur (2).

10. Système selon l'une des revendications 5 à 9, **caractérisé, en ce que** le boîtier de commande (12) reçoit un signal de la soupape de purge (7) et agit sur le frein de stationnement (13) du véhicule tracteur (2).

11. Système selon l'une des revendications 5 à 10, **caractérisé en ce que** le boîtier de commande (12) reçoit un signal de la soupape de purge (7) et bloque ou libère le mécanisme de verrouillage (17) du dispositif d'accouplement (1).
